# EUROPEAN PATENT SPECIFICATION

(11) **EP 3 121 691 B1**
(45) Date of publication and mention of the grant of the patent: **18.03.2020**
(21) Application number: 14886251.9
(22) Date of filing: 18.03.2014
(51) Int. Cl.: G06F 3/023, G06F 3/0488

(54) **METHOD AND TERMINAL FOR INPUTTING TEXT**
VERFAHREN UND ENDGERÄT ZUR TEXTEINGABE
PROCÉDÉ ET TERMINAL D'ENTRÉE DE TEXTE

(43) Date of publication of application: 25.01.2017
(73) Proprietor: Huawei Device Co., Ltd., Dongguan, Guangdong 523808 (CN)
(72) Inventor: MA, Jianke, Shenzhen Guangdong 518129 (CN)
(74) Representative: Isarpatent
(86) International application number: PCT/CN2014/073588
(87) International publication number: WO 2015/139196

(56) References cited:
- WO-A1-2011/079417
- CN-A- 1 908 864
- CN-A- 101 308 515
- CN-A- 102 629 160
- CN-A- 102 893 238
- US-A1- 2002 049 795
- US-A1- 2008 270 896
- US-A1- 2013 249 832

## Description

### TECHNICAL FIELD

The present invention relates to the field of terminals, and in particular, to a text input method and apparatus, and a terminal.

### BACKGROUND

With the development of digital technologies and terminal technologies, there are increasingly more types of functions and applications on a terminal device. Text input is an important auxiliary function for implementing multiple functions and applications by a terminal device, and is widely applied to terminal devices.

In the prior art, when a text input method is used to input a word, and when a user inputs a word by using an external device, a system automatically predicts some words, phrases, or short sentences, and displays the predicted text in a text predicting window. If the text predicted and displayed by the system is a word that the user wants to input, the user can select the word, so as to implement quick input. However, if the word that the user wants to input is a part of words predicted by the system, the user can only continue to input a wanted expression manually, or select a predicted expression that includes the word that the user wants to input, and then delete an unneeded word. In this case, quick word input cannot be implemented, and input efficiency is low.

Document WO 2011 / 0 079 417 A1 discloses a method for predictive text input. Further document US 2013 / 0 249 832 A1 discloses a mobile terminal with a prediction candidate storage unit for storing input prediction candidates, wherein the input prediction candidates are included in a text based on a user input. Document US 2008/270896 A1 discloses, in the same context of text entry, a step of deleting a pre-input text i.e. deleting text before it is sent to the application thus easily correcting a user mistake. Said deletion is performed by a simple operation, such as moving a pen or a finger to an outer edge of a virtual keyboard or dragging to a special cancel icon or cancel area.

### SUMMARY

The present invention solves the problem of providing text input with increased efficiency. The solution is stated in claim 1 and in claim 7 accordingly. Further advantageous embodiments and improvements are listed in the dependent claims. Hereinafter, aspects of the invention which contribute to the understanding of the invention are listed.

Aspects of the present invention provide a text input method and a terminal, so that a user can quickly select a needed word from a text predicted by a system or an already input text, to implement quick word input.

A first aspect provides a text input method, where the method includes:
acquiring a text input instruction that is generated by performing a first operation by a user, and presenting an input text according to the text input instruction;
querying a text prediction database according to the input text, to acquire a predicted text set corresponding to the input text, and presenting the predicted text set corresponding to the input text, where the predicted text set is a set of phrases or sentences;
acquiring a predicted text selection instruction that is generated by performing a second operation by the user, and acquiring a predicted text in a subset of the predicted text set according to the predicted text selection instruction, where the predicted text is a field in the subset of the predicted text set; and
acquiring a predicted text input instruction that is generated by performing a third operation by the user, and inputting the predicted text into a text input window according to the predicted text input instruction, wherein the second operation is a slide gesture operation; the method further includes: determining, according to the predicted text selection instruction generated by the slide gesture operation, a sliding track corresponding to the slide gesture operation, where the sliding track is a track formed by action points of the slide gesture operation on an output device; and the acquiring a predicted text in a subset of the predicted text set according to the predicted text selection instruction includes: determining a text field in the subset of the predicted text set according to the sliding track, when it is detected that the second operation is the slide gesture operation, displaying, at a preset position, a predicted text selected by the slide gesture operation, the present position indicating that the predicted text is in a pre-input state, where pre-input refers to that input content being in a temporary state, wherein a further processing operation needs to be performed on the input content in the temporary state to really input the text into the text input window or the pre-input text in the temporary state may be deleted by a simple operation.
Each subset in the predicted text set is provided with a mark line; the second operation is a slide gesture operation performed on the mark line by the user; and the acquiring a predicted text in a subset of the predicted text set according to the predicted text selection instruction includes: acquiring, according to a sliding track of the slide gesture operation on the mark line, a text field corresponding to a mark line that coincides with the sliding track.

According to the first aspect, in a first possible implementation manner, after the acquiring a predicted text in the predicted text set according to the predicted text selection instruction, the method further includes: displaying the predicted text by means of highlight display or grayscale display, or by using a color differentiated from that of an unselected text.

According to the first aspect, or the first possible implementation manner of the first aspect, in a second possible implementation manner, the acquiring a predicted text input instruction that is generated by performing a third operation by the user, and inputting the predicted text into a text input window according to the predicted text input instruction includes: acquiring a predicted text input instruction that is generated by tapping a preset button by the user, and inputting the predicted text into the text input window according to the predicted text input instruction.

According to the first aspect, or the first, second possible implementation manner of the first aspect, in a third possible implementation manner, the method includes:
acquiring a position at which a cursor is located in a text input window; and
acquiring a text input instruction that is generated by performing a fourth operation by a user, and inputting, according to the text input instruction, an already input text in the text input window into the position at which the cursor is located in the text input window.

According to the third possible implementation manner, in a fourth possible implementation manner, the fourth operation is a slide gesture operation; the method further includes: determining, according to the text input instruction generated by the slide gesture operation, a sliding track corresponding to the slide gesture operation, where the sliding track is a track formed by action points of the slide gesture operation on an output device; and the inputting, according to the text input instruction, an already input text in the text input window into the position at which the cursor is located in the text input window includes: determining, according to the sliding track, the already input text in the text input window, and inputting the already input text into the position at which the cursor is located in the text input window.

According to the third possible implementation manner of the first aspect, in a fifth possible implementation manner, all already input texts in the text input window are provided with a mark line; the fourth operation is a slide gesture operation performed on the mark line by the user; and the inputting, according to the text input instruction, an already input text in the text input window into the position at which the cursor is located in the text input window includes: acquiring, according to a sliding track of the slide gesture operation on the mark line, an already input text corresponding to a mark line that coincides with the sliding track, and inputting the already input text into the position at which the cursor is located in the text input window.

A second aspect provides a terminal, where the terminal includes: an input device, a processor, a memory, and a software module that is physically stored in the memory, where the software module includes instructions that is used to enable the processor and the terminal to perform the following processes:
acquiring a text input instruction that is generated by performing a first operation by a user, and presenting an input text according to the text input instruction;
querying a text prediction database according to the input text, to acquire a predicted text set corresponding to the input text, and presenting the predicted text set corresponding to the input text, where the predicted text set is a set of phrases or sentences;
acquiring a predicted text selection instruction that is generated by performing a second operation by the user, and acquiring a predicted text in a subset of the predicted text set according to the predicted text selection instruction, where the predicted text is a field in the subset of the predicted text set; and
acquiring a predicted text input instruction that is generated by performing a third operation by the user, and inputting the predicted text into a text input window according to the predicted text input instruction;
wherein the second operation is a slide gesture operation; the software module further includes an instruction that is used to enable the processor and the terminal to perform the following process: determining, according to the predicted text selection instruction generated by the slide gesture operation, a sliding track corresponding to the slide gesture operation, where the sliding track is a track formed by action points of the slide gesture operation on an output device; and
an instruction that is used by the software module to enable the processor and the terminal to perform the acquiring a predicted text in a subset of the predicted text set according to the predicted text selection instruction, is: determining a text field in the subset of the predicted text set according to the sliding track,
wherein the software module further comprises an instruction that is used to enable the processor to perform the following process:
when it is detected that the second operation is the slide gesture operation, displaying, at a preset position, a predicted text selected by the slide gesture operation, the present position indicating that the predicted text is in a pre-input state, where pre-input refers to that input content being in a temporary state, wherein a further processing operation needs to be performed on the input content in the temporary state to really input the text into the text input window or the pre-input text in the temporary state may be deleted by a simple operation.

Each subset in the predicted text set is provided with a mark line; the second operation is a slide gesture operation performed on the mark line by the user; and
an instruction that is used by the software module to enable the processor and the terminal to perform the acquiring a predicted text in a subset of the predicted text set according to the predicted text selection instruction is: acquiring, according to a sliding track of the slide gesture operation on the mark line, a text field corresponding to a mark line that coincides with the sliding track.

According to the second aspect, in a first possible implementation manner, after the acquiring a predicted text in the predicted text set according to the predicted text selection instruction, the software module further includes an instruction that is used to enable the processor and the terminal to perform the following process: displaying the predicted text by means of highlight display or grayscale display, or by using a color differentiated from that of an unselected text.

According to the second aspect, or the first possible implementation manner of the second aspect, in a second possible implementation manner, an instruction that is used by the software module to enable the processor and the terminal to perform the acquiring a predicted text input instruction that is generated by performing a third operation by the user, and inputting the predicted text into a text input window according to the predicted text input instruction is: acquiring a predicted text input instruction that is generated by tapping a preset button by the user, and inputting the predicted text into the text input window according to the predicted text input instruction.

According to a third possible implementation manner of the second aspect, the software module includes instructions that is used to enable the processor and the terminal to perform the following processes:
acquiring a position at which a cursor is located in a text input window; and
acquiring a text input instruction that is generated by performing a fourth operation by a user, and inputting, according to the text input instruction, an already input text in the text input window into the position at which the cursor is located in the text input window.

According to a fourth possible implementation manner of the third possible implementation manner of the second aspect, the fourth operation is a slide gesture operation; the software module further includes an instruction that is used to enable the processor and the terminal to perform the following process: determining, according to the text input instruction generated by the slide gesture operation, a sliding track corresponding to the slide gesture operation, where the sliding track is a track formed by action points of the slide gesture operation on an output device; and
an instruction that is used by the software module to enable the processor and the terminal to perform the inputting, according to the text input instruction, an already input text in the text input window into the position at which the cursor is located in the text input window is: determining, according to the sliding track, the already input text in the text input window, and inputting the already input text into the position at which the cursor is located in the text input window.

According to the fourth possible implementation manner of the second aspect, in an fifth possible implementation manner, all already input texts in the text input window are provided with a mark line; the fourth operation is a slide gesture operation performed on the mark line by the user; and
an instruction that is used by the software module to enable the processor and the terminal to perform the inputting, according to the text input instruction, an already input text in the text input window into the position at which the cursor is located in the text input window is: acquiring, according to a sliding track of the slide gesture operation on the mark line, an already input text corresponding to a mark line that coincides with the sliding track, and inputting the already input text into the position at which the cursor is located in the text input window.

The aspects of the present invention provide a text input method and apparatus, and a terminal, where a text input instruction that is generated by performing a first operation by a user is acquired, and an input text is presented according to the text input instruction; a text prediction database is queried according to the input text, to acquire a predicted text set corresponding to the input text, and the predicted text set corresponding to the input text is presented, where the predicted text set is a set of phrases or sentences; a predicted text selection instruction that is generated by performing a second operation by the user is acquired, and a predicted text in a subset of the predicted text set is acquired according to the predicted text selection instruction, where the predicted text is a field in the subset of the predicted text set; and a predicted text input instruction that is generated by performing a third operation by the user is acquired, and the predicted text is input into a text input window according to the predicted text input instruction. In the present invention, a user can quickly select, by using a processing instruction such as drag or tap, a needed word from a text predicted by a system or an already input text; therefore, the technical solutions provided in the embodiments of the present invention implement quick word input and improve input efficiency.

### BRIEF DESCRIPTION OF DRAWINGS

To describe the technical solutions in the embodiments of the present invention more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of a text input method according to an embodiment of the present invention;
FIG. 2 is a schematic diagram of quickly inputting text content included in a predicted text into a text input window according to an embodiment of the present invention;
FIG. 3 is a flowchart of another text input method according to an embodiment of the present invention;
FIG. 4 is a schematic diagram of a text input apparatus according to an embodiment of the present invention;
FIG. 5 is a schematic diagram of another text input apparatus according to an embodiment of the present invention;
FIG. 6 is a schematic diagram of a terminal according to an embodiment of the present invention; and
FIG. 7 is a schematic diagram of another terminal according to an embodiment of the present invention.

### DESCRIPTION OF EMBODIMENTS

The technical solutions of the present invention are further described in detail below by using accompanying drawings and embodiments.

In an actual application, a text input method and apparatus provided in the embodiments of the present invention, as a good text input method, may be applied in a scenario in which a text needs to be input to a terminal. When a word is input to the terminal, the terminal may automatically query a predicted text database to acquire a predicted text that a user may input next, and the predicted text is displayed on a terminal interface. When the user finds that the predicted text includes a word that the user wants to input, the user may perform a touch operation on a touchscreen to trigger the terminal to execute an instruction of selecting the word that the user wants to input, and the terminal selects, according to the instruction, text content that the user needs. Therefore, in the embodiments of the present invention, when a predicted text includes a text that a user wants to input, the text can be quickly selected from the predicted text, implementing quick text input and improving user experience.

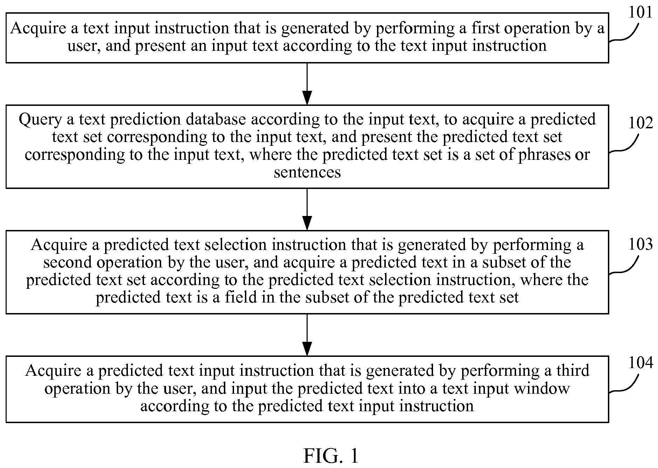

FIG. 1 is a flowchart of a text input method according to an embodiment of the present invention. This embodiment is executed by a terminal, and describes in detail a process in which a terminal performs, after receiving a text input by a user, prediction according to the text input by the user and quickly inputs a text that the user wants to input next. As shown in the figure, this embodiment includes the following execution steps:
Step 101: Acquire a text input instruction that is generated by performing a first operation by a user, and present an input text according to the text input instruction.

The user usually may perform the first operation on a terminal by using a keyboard or a touchscreen, so as to generate the text input instruction. The terminal may display the input text on a display screen of the terminal according to the text input instruction.

Step 102: Query a text prediction database according to the input text, to acquire a predicted text set corresponding to the input text, and present the predicted text set corresponding to the input text, where the predicted text set is a set of phrases or sentences.

To implement the technical solution of the present invention, in an actual application, the terminal provides a text prediction database. The text prediction database may be obtained according to a parameter delivered by a network server, or may be obtained with reference to a parameter delivered by a network server and an everyday wording habit of the user of this terminal, and includes input texts and sets of predicted texts that are usually used in collocation with the input texts. The predicted text set is a set of phrases or sentences that are usually used in collocation with the input text, and may include multiple subsets of the predicted text set, where each predicted text subset is one phrase or one sentence.

The predicted text subset may include multiple fields. The field may be a single word, may be a part of a phrase or a sentence in the predicted text set, or may be a phrase or a sentence in the predicted text set. For example, after the user inputs a text "wo", the terminal may obtain predicted texts "wo men", "wo zai", "wo zai gong si", "wo zai shang ban de lu shang", and the like by querying the text prediction database.

After acquiring the predicted text set corresponding to the input text, the terminal may display the phrases or sentences in a predicted text window.

Optionally, the predicted text set may include multiple phrases and sentences, and if there are too many predicted texts, the predicted texts may be displayed in different pages.

It should be noted that the predicted text database provided in this embodiment of the present invention may be updated according to a parameter delivered by the network server, or may be updated according to a change of a usage habit of the user of this terminal. For example, if the user has often input a text "wo mu qian bu zai bei jing" recently, "wo mu qian bu zai bei jing" may be included as a predicted text, which is stored in the predicted text database, of the input text "wo". That the predicted text database is updated at any time facilitates using of the user, and implements quick text input.

Step 103: Acquire a predicted text selection instruction that is generated by performing a second operation by the user, and acquire a predicted text in a subset of the predicted text set according to the predicted text selection instruction, where the predicted text is a field in the subset of the predicted text set.

The second operation is a slide gesture operation; the method further includes: determining, according to the predicted text selection instruction generated by the slide gesture operation, a sliding track corresponding to the slide gesture operation, where the sliding track is a track formed by action points of the slide gesture operation on an output device; and the acquiring a predicted text in a subset of the predicted text set according to the predicted text selection instruction includes: determining a text field in the subset of the predicted text set according to the sliding track.

Specifically, in a case in which the sliding track totally coincides with a subset of the predicted text set, a field between a slide start point and a slide end point is acquired; or in a case in which the sliding track does not totally coincide with a subset of the predicted text set, a field of a part, which coincides with the sliding track on an output device, of the predicted text subset may be acquired, and specific adjustment may be made according to a position at which the field and the sliding track actually coincide, for example, a display position of the predicted text subset on the output device may be considered as a track, at least two crosspoints at this track and the sliding track are acquired, and a field between the crosspoints is acquired.

Each subset in the predicted text set is provided with a mark line; the second operation is a slide gesture operation performed on the mark line by the user; and the acquiring a predicted text in a subset of the predicted text set according to the predicted text selection instruction includes: acquiring, according to a sliding track of the slide gesture operation on the mark line, a text field corresponding to a mark line that coincides with the sliding track.

Specifically, after the terminal displays the phrases or sentences in the predicted text set obtained through query, the user may perform corresponding processing according to whether the predicted text set includes text content that the user needs. If a phrase in the predicted text set is just a text that the user needs to input, the predicted text may be selected directly by inputting, by using a keyboard, a number corresponding to the predicted text, or the predicted text may be selected by tapping, on a touchscreen, a number corresponding to the predicted text, or the predicted text may be selected by dragging, on a touchscreen, a mark line below the predicted text. If only a part of the predicted text is the text that the user needs, the user may select, by tapping on the touchscreen, the first word of the text that the user needs, keep the finger on the touchscreen, and then slide right to the last word of the text that the user needs; or select, by tapping on the touchscreen, the last word of the text that the user needs, keep the finger on the touchscreen, and then slide left to the last word of the text that the user needs; or just drag, on the touchscreen, a mark line below the needed text. When the user performs an operation of selecting the needed text by using the keyboard or the touchscreen.

Optionally, after the predicted text in the predicted text set is acquired after according to the predicted text selection, the predicted text may further be displayed by means of highlight display or grayscale display, or by using a color differentiated from that of an unselected text. For example, if subsets in the predicted text set are displayed in black before an operation of selecting a predicted text is performed, after a predicted text is selected, the selected predicted text may be displayed by means of grayscale display or highlight display, or may be displayed in blue or in another color different from black. In this way, the user can conveniently determine what predicted text is selected.

Optionally, after the second operation is performed, if the second operation is the slide gesture operation, the predicted text selected by the slide gesture operation is displayed at a preset position. Displaying the selected predicted text at the preset position indicates that the predicted text is in a pre-input state, where pre-input refers to that input content is in a temporary state. A pre-input text may be displayed in a suspended state in the text input window, and a further processing operation needs to be performed on the input content in the temporary state to really input the text into the text input window. In addition, the user may delete the pre-input text in the temporary state by a simple operation.

When it is detected that the second operation is the slide gesture operation, a manner of displaying, at the preset position, the predicted text selected by the slide gesture operation includes: first, after the slide gesture operation is completed, displaying, at the preset position, all content selected by a slide gesture; second, in a process of the slide gesture operation, along with the slide gesture operation, successively displaying, at the preset position, words successively selected by the slide gesture operation, that is, the user performs the slide gesture operation, and when one more word is selected, one more word is displayed at the preset position; when one less word is selected, one less word is displayed at the preset position. Certainly, a specific manner of displaying the predicted text is not specifically limited in this embodiment of the present invention.

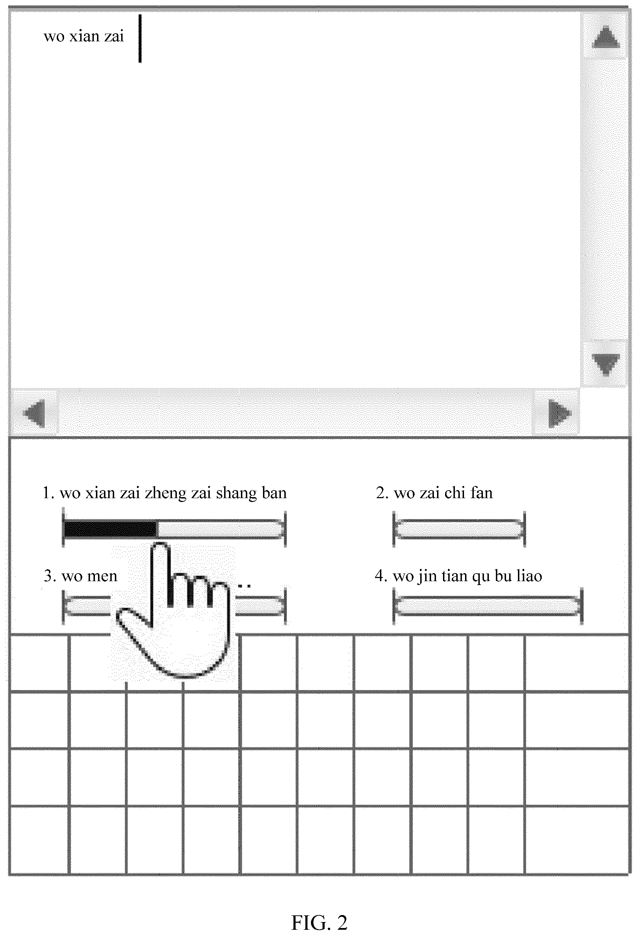

FIG. 2 is a schematic diagram of quickly inputting text content included in a predicted text into a text input window according to an embodiment of the present invention. As shown in the figure, if a user inputs a text "wo" by using a keyboard or by writing on a touchscreen, a terminal may display, by querying a predicted text database, a predicted text set: "wo xian zai zheng zai shang ban", "wo zai chi fan", "wo men bu zai jia", and "wo jin tian qu bu liao". If a text that a user wants to input is "wo xian zai yao qu guang jie", the user may select a field, that is, a text of "wo xian zai" in a predicted text subset "wo xian zai zheng zai shang ban" to implement quick input. A specific selection method may be: first selecting a word "wo", and then sliding right to "zai"; or selecting a word "zai", and then sliding left to "wo"; or dragging a mark line below "wo xian zai zheng zai shang ban" to select the text "wo xian zai", to implement quick text input.

Step 104: Acquire a predicted text input instruction that is generated by performing a third operation by the user, and input the predicted text into a text input window according to the predicted text input instruction.

The acquiring a predicted text input instruction that is generated by performing a third operation by the user, and inputting the predicted text into a text input window according to the predicted text input instruction specifically includes: acquiring a predicted text input instruction that is generated by tapping a preset button by the user, and inputting the predicted text into the text input window according to the predicted text input instruction.

Optionally, the preset button may be displayed at any position of the touchscreen, or the preset button may be replaced by a physically existing key of the terminal, which may be set in this embodiment of the present invention.

After the predicted text input instruction is executed, the selected predicted text may be displayed. To implement the technical solution provided in this embodiment of the present invention, a preset button may be displayed while the selected predicted text is displayed, and a predicted text input instruction may be generated by tapping the preset button, to input the predicted text into the text input window.

In the text input method provided in this embodiment of the present invention, a text input instruction that is generated by performing a first operation by a user is acquired, and an input text is presented according to the text input instruction; a text prediction database is queried according to the input text, to acquire a predicted text set corresponding to the input text, and the predicted text set corresponding to the input text is presented, where the predicted text set is a set of phrases or sentences; a predicted text selection instruction that is generated by performing a second operation by the user is acquired, and a predicted text in a subset of the predicted text set is acquired according to the predicted text selection instruction, where the predicted text is a field in the subset of the predicted text set; and a predicted text input instruction that is generated by performing a third operation by the user is acquired, and the predicted text is input into a text input window according to the predicted text input instruction. In the present invention, a user can quickly select, by using a processing instruction such as drag or tap, a needed word from a text predicted by a system; therefore, the technical solution provided in this embodiment of the present invention implements quick word input and improves input efficiency.

According to the foregoing technical solution, a terminal can quickly input, into a text input window, content, which a user needs to input, in a predicted text corresponding to an input text of the user. An embodiment is used below to describe a method of inputting again, into a text input window, an already input text that is already input into the text input window.

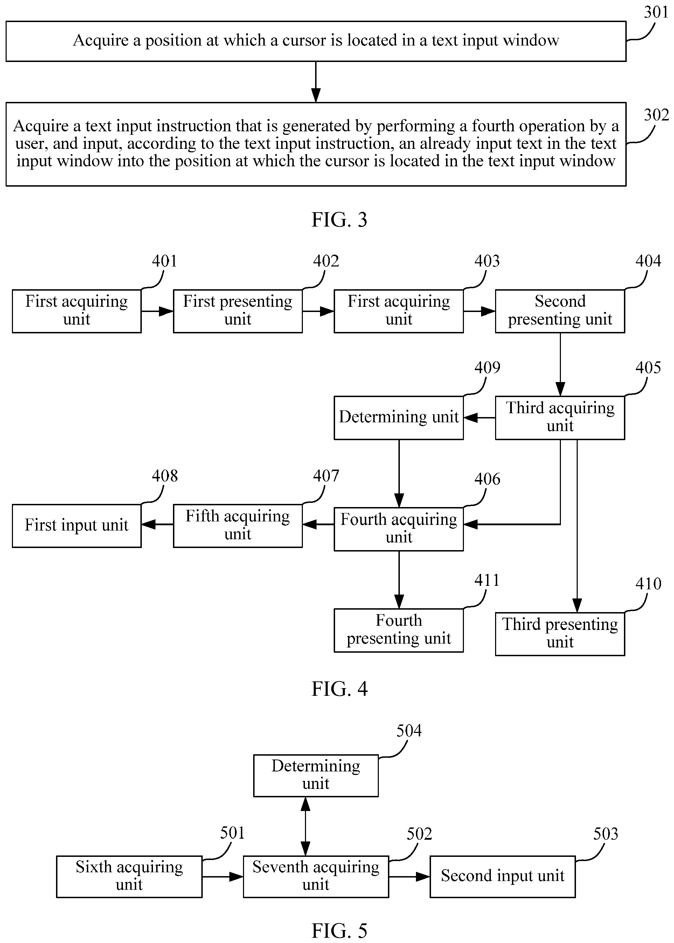

FIG. 3 is a flowchart of another text input method according to an embodiment of the present invention. This embodiment is executed by a terminal.

Step 301: Acquire a position at which a cursor is located in a text input window.

When a text is input into the text input window, the terminal first acquires the position at which the cursor is located, so that text input is subsequently performed at the position at which the cursor is located.

In this embodiment of the present invention, the position at which the cursor is located is a position for text input. In a process of executing the technical solution of this embodiment of the present invention, the cursor may be always located at the position for text input, and does not change when the terminal performs an operation of selecting some already input texts.

Step 302: Acquire a text input instruction that is generated by performing a first operation by a user, and input, according to the text input instruction, an already input text in the text input window into the position at which the cursor is located in the text input window.

The first operation is a slide gesture operation; and the method further includes: determining, according to the text input instruction generated by the slide gesture operation, a sliding track corresponding to the slide gesture operation, where the sliding track is a track formed by action points of the slide gesture operation on an output device. Optionally, the acquiring a text input instruction that is generated by performing a first operation by a user, and inputting, according to the text input instruction, an already input text in the text input window into the position at which the cursor is located in the text input window specifically includes: determining, according to the sliding track, the already input text in the text input window, and inputting the already input text into the position at which the cursor is located in the text input window.

Optionally, all already input texts in the text input window may be provided with a mark line; and the first operation may be a slide gesture operation performed on the mark line by the user. Optionally, the acquiring a text input instruction that is generated by performing a first operation by a user, and inputting, according to the text input instruction, an already input text in the text input window into the position at which the cursor is located in the text input window specifically includes: acquiring, according to a sliding track of the slide gesture operation on the mark line, an already input text corresponding to a mark line that coincides with the sliding track, and inputting the already input text into the position at which the cursor is located in the text input window.

In specific implementation, the technical solution provided in this embodiment of the present invention may control that the position of the cursor in the text input window is not moved when the first operation is performed and the text input instruction is generated, while the cursor may be moved when another operation such as a double-tap operation is performed.

When the user performs the first operation on the terminal and the text input instruction is generated, the terminal may input the already input text into the position at which the cursor is located in the text input window. Therefore, in this embodiment of the present invention, text input efficiency is also improved.

Therefore, according to the method provided in this embodiment of the present invention, a position at which a cursor is located in a text input window is acquired, a text input instruction that is generated by performing a first operation by a user is acquired, and according to the text input instruction, an already input text in the text input window is input into the position at which the cursor is located in the text input window. In this way, under the condition that a position at which a cursor is located is not changed, some already input texts are directly selected, and the selected already input texts are input into the position at which the cursor is located. Compared with the prior art that a cursor is first located at an already input text that a user wants to select, the already input text is copied, the cursor is then located at a position at which the user wants to input the text, and the copied text is pasted at the position, this embodiment of the present invention reduces unnecessary cumbersome operations and improves text input efficiency.

Correspondingly, an embodiment of the present invention further provides a text input apparatus. FIG. 4 is a schematic diagram of a text input apparatus according to an embodiment of the present invention.

A first acquiring unit 401 is configured to acquire a text input instruction that is generated by performing a first operation by a user.

The user usually may perform the first operation on a terminal by using a keyboard or a touchscreen, so as to generate the text input instruction.

A first presenting unit 402 is configured to present an input text according to the text input instruction.

A second acquiring unit 403 is configured to query a text prediction database according to the input text, to acquire a predicted text set corresponding to the input text, where the predicted text set is a set of phrases or sentences.

To implement the technical solution of the present invention, in an actual application, the terminal provides a text prediction database. The text prediction database may be obtained according to a parameter delivered by a network server, or may be obtained with reference to a parameter delivered by a network server and an everyday wording habit of the user of this terminal, and includes input texts and sets of predicted texts that are usually used in collocation with the input texts. The predicted text set is a set of phrases or sentences that are usually used in collocation with the input text, and may include multiple subsets of the predicted text set, where each predicted text subset is one phrase or one sentence.

The predicted text subset may include multiple fields. The field may be a single word, may be a part of a phrase or a sentence in the predicted text set, or may be a phrase or a sentence in the predicted text set. For example, after the user inputs a text "wo", the terminal may obtain predicted texts "wo men", "wo zai", "wo zai gong si", "wo zai shang ban de lu shang", and the like by querying the text prediction database.

It should be noted that the predicted text database provided in this embodiment of the present invention may be updated according to a parameter delivered by the network server, or may be updated according to a change of a usage habit of the user of this terminal. For example, if the user has often input a text "wo mu qian bu zai bei jing" recently, "wo mu qian bu zai bei jing" may be included as a predicted text, which is stored in the predicted text database, of the input text "wo". That the predicted text database is updated at any time facilitates using of the user, and implements quick text input.

A second presenting unit 404 is configured to present the predicted text set corresponding to the input text.

After acquiring the predicted text set corresponding to the input text, the terminal may display the phrases or sentences in a predicted text window.

Optionally, the predicted text set may include multiple phrases and sentences, and if there are too many predicted texts, the predicted texts may be displayed in different pages.

A third acquiring unit 405 is configured to acquire a predicted text selection instruction that is generated by performing a second operation by the user.

A fourth acquiring unit 406 is configured to acquire a predicted text in a subset of the predicted text set according to the predicted text selection instruction, where the predicted text is a field in the subset of the predicted text set.

The second operation is a slide gesture operation.

Optionally, the apparatus provided in this embodiment of the present invention further includes: a determining unit 409, configured to determine, according to the predicted text selection instruction generated by the slide gesture operation, a sliding track corresponding to the slide gesture operation, where the sliding track is a track formed by action points of the slide gesture operation on an output device.

The fourth acquiring unit 406 is specifically configured to determine a text field in the subset of the predicted text set according to the sliding track.

Each subset in the predicted text set may be provided with a mark line; and the second operation is a slide gesture operation performed on the mark line by the user.

Optionally, the fourth acquiring unit 406 is specifically configured to acquire, according to a sliding track of the slide gesture operation on the mark line, a text field corresponding to a mark line that coincides with the sliding track.

A fifth acquiring unit 407 is configured to acquire a predicted text input instruction that is generated by performing a third operation by the user.

The fifth acquiring unit is specifically configured to acquire a predicted text input instruction that is generated by tapping a preset button by the user.

A first input unit 408 is configured to input the predicted text into a text input window according to the predicted text input instruction.

Preferably, the apparatus provided in this embodiment of the present invention further includes: a third presenting unit 410, configured to: when it is detected that the second operation is the slide gesture operation, display, at a preset position, the predicted text selected by the slide gesture operation.

Optionally, after the second operation is performed, if the second operation is the slide gesture operation, the predicted text selected by the slide gesture operation is displayed at a preset position. Displaying the selected predicted text at the preset position indicates that the predicted text is in a pre-input state, where pre-input refers to that input content is in a temporary state. A pre-input text may be displayed in a suspended state in the text input window, and a further processing operation needs to be performed on the input content in the temporary state to really input the text into the text input window. In addition, the user may delete the pre-input text in the temporary state by a simple operation.

Preferably, the apparatus provided in this embodiment of the present invention further includes: a fourth presenting unit 411, configured to display the predicted text by means of highlight display or grayscale display, or by using a color differentiated from that of an unselected text.

In this embodiment of the present invention, a user can quickly select, by using a processing instruction such as drag or tap, a needed word from a text predicted by a system; therefore, the technical solution provided in this embodiment of the present invention implements quick word input.

An embodiment of the present invention further provides a text input apparatus. FIG. 5 is a schematic diagram of another text input apparatus according to an embodiment of the present invention.

A sixth acquiring unit 501 is configured to acquire a position at which a cursor is located in a text input window.

When a text is input into the text input window, a terminal first acquires the position at which the cursor is located, so that text input is subsequently performed at the position at which the cursor is located.

A seventh acquiring unit 502 is configured to acquire a text input instruction that is generated by performing a fourth operation by a user.

A second input unit 503 is configured to input, according to the text input instruction, an already input text in the text input window into the position at which the cursor is located in the text input window.

Optionally, the fourth operation may be a slide gesture operation. The apparatus provided in this embodiment of the present invention further includes: a determining unit 504, configured to determine, according to the text input instruction generated by the slide gesture operation, a sliding track corresponding to the slide gesture operation, where the sliding track is a track formed by action points of the slide gesture operation on an output device; where the second input unit is specifically configured to: determine, according to the sliding track, the already input text in the text input window, and input the already input text into the position at which the cursor is located in an output window.

Optionally, all already input texts in the text input window may be provided with a mark line; the fourth operation is a slide gesture operation performed on the mark line by the user; and the second input unit unit is specifically configured to: determine, according to a sliding track of the slide gesture operation on the mark line, an already input text corresponding to a mark line that coincides with the sliding track, and input the already input text into the position at which the cursor is located in the text input window.

Therefore, according to the apparatusprovided in this embodiment of the present invention, a position at which a cursor is located in a text input window is acquired, a text input instruction that is generated by performing a fourth operation by a user is acquired, and according to the text input instruction, an already input text in the text input window is input into the position at which the cursor is located in the text input window. In this way, under the condition that a position at which a cursor is located is not changed, some already input texts are directly selected, and the selected already input texts are input into the position at which the cursor is located. Compared with the prior art that a cursor is first located at an already input text that a user wants to select, the already input text is copied, the cursor is then located at a position at which the user wants to input the text, and the copied text is pasted at the position, this embodiment of the present invention reduces unnecessary cumbersome operations and improves text input efficiency.

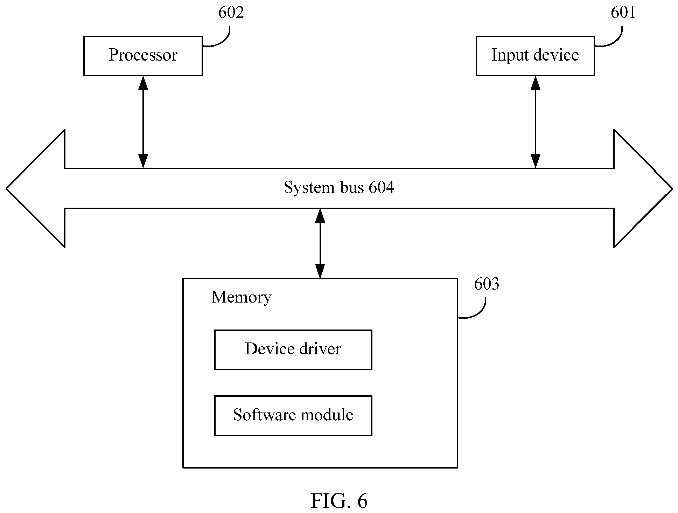

Correspondingly, an embodiment of the present invention further provides a terminal. FIG. 6 is a schematic diagram of a terminal according to an embodiment of the present invention. As shown in the figure, the terminal includes: an input device 601, a processor 602, a memory 603, and a system bus 604 that is configured to connect the input device 601, the processor 602, and the memory 603.

The input device 601 is configured to receive externally input content, and may include an input device such as a touchscreen and a keyboard.

The memory 603 may be a permanent memory, such as a hard disk drive and a flash memory. The memory 603 has a software module and a device driver. The software module can execute functional modules of the foregoing methods of the present invention, and the device driver may be network and interface drivers.

During startup, the software module is loaded into the memory 603, and is then accessed by the processor 602 to execute the following instructions:
acquiring a text input instruction that is generated by performing a first operation by a user, and presenting an input text according to the text input instruction;
querying a text prediction database according to the input text, to acquire a predicted text set corresponding to the input text, and presenting the predicted text set corresponding to the input text, where the predicted text set is a set of phrases or sentences;
acquiring a predicted text selection instruction that is generated by performing a second operation by the user, and acquiring a predicted text in a subset of the predicted text set according to the predicted text selection instruction, where the predicted text is a field in the subset of the predicted text set; and
acquiring a predicted text input instruction that is generated by performing a third operation by the user, and inputting the predicted text into a text input window according to the predicted text input instruction.

The second operation is a slide gesture operation; further, after accessing the memory 603, the processor 602 may further execute an instruction: determining, according to the predicted text selection instruction generated by the slide gesture operation, a sliding track corresponding to the slide gesture operation, where the sliding track is a track formed by action points of the slide gesture operation on an output device.

Specifically, a process of acquiring, by the processor 602, a predicted text in a subset of the predicted text set according to the predicted text selection instruction is specifically: determining a text field in the subset of the predicted text set according to the sliding track.

Each subset in the predicted text set is provided with a mark line; and the second operation is a slide gesture operation performed on the mark line by the user.

Specifically, a process of acquiring, by the processor 602, a predicted text in a subset of the predicted text set according to the predicted text selection instruction includes: acquiring, according to a sliding track of the slide gesture operation on the mark line, a text field corresponding to a mark line that coincides with the sliding track.

Further, the processor 602 may further execute an instruction: when it is detected that the second operation is the slide gesture operation, displaying, at a preset position, the predicted text selected by the slide gesture operation.

Further, after performing the acquiring a predicted text in the predicted text set according to the predicted text selection instruction, the processor 602 may further execute an instruction: displaying the selected text content that the user needs by means of highlight display or grayscale display, or by using a color differentiated from that of an unselected text.

Specifically, a process of acquiring, by the processor 602, a predicted text input instruction that is generated by performing a third operation by the user, and inputting the predicted text into a text input window according to the predicted text input instruction specifically includes: acquiring a predicted text input instruction that is generated by tapping a preset button by the user, and inputting the predicted text into the text input window according to the predicted text input instruction.

In this embodiment of the present invention, a user can quickly select a needed word from a text predicted by a system or an already input text; therefore, the technical solution provided in this embodiment of the present invention implements quick word input.

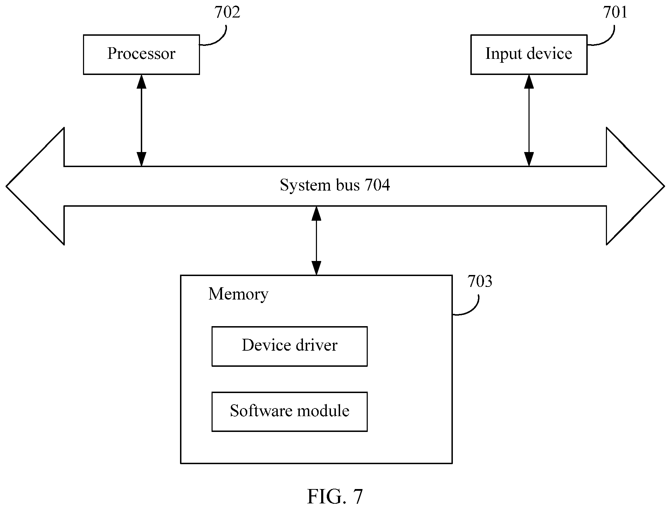

Correspondingly, an embodiment of the present invention further provides a terminal. FIG. 7 is a schematic diagram of another terminal according to an embodiment of the present invention. As shown in the figure, the terminal includes: an input device 701, a processor 702, a memory 703, and a system bus 704 that is configured to connect the input device 701, the processor 702, and the memory 703.

The input device 701 is configured to receive externally input content, and may include an input device such as a touchscreen and a keyboard.

The memory 703 may be a permanent memory, such as a hard disk drive and a flash memory. The memory 703 has a software module and a device driver. The software module can execute functional modules of the foregoing methods of the present invention, and the device driver may be network and interface drivers.

During startup, the software module is loaded into the memory 703, and is then accessed by the processor 702 to execute the following instructions:
acquiring a position at which a cursor is located in a text input window; and
acquiring a text input instruction that is generated by performing a fourth operation by a user, and inputting, according to the text input instruction, an already input text in the text input window into the position at which the cursor is located in the text input window.

The fourth operation is a slide gesture operation; further, after accessing the memory 703, the processor 702 may further execute an instruction: determining, according to the text input instruction generated by the slide gesture operation, a sliding track corresponding to the slide gesture operation, where the sliding track is a track formed by action points of the slide gesture operation on an output device.

Specifically, a process of acquiring, by the processor 702, a text input instruction that is generated by performing a fourth operation by a user, and inputting, according to the text input instruction, an already input text in the text input window into the position at which the cursor is located in the text input window includes: determining, according to the sliding track, the already input text in the text input window, and inputting the already input text into the position at which the cursor is located in the text input window.

All already input texts in the text input window are provided with a mark line; and the fourth operation is a slide gesture operation performed on the mark line by the user.

Specifically, a process of acquiring, by the processor 702, a text input instruction that is generated by performing a fourth operation by a user, and inputting, according to the text input instruction, an already input text in the text input window into the position at which the cursor is located in the text input window includes: acquiring, according to a sliding track of the slide gesture operation on the mark line, an already input text corresponding to a mark line that coincides with the sliding track, and inputting the already input text into the position at which the cursor is located in the text input window.

Therefore, according to the apparatus provided in this embodiment of the present invention, a position at which a cursor is located in a text input window is acquired, a text input instruction that is generated by performing a first operation by a user is acquired, and according to the text input instruction, an already input text in the text input window is input into the position at which the cursor is located in the text input window. This improves text input efficiency.

A person skilled in the art may further realize that the embodiments of the present invention do not limit specific hardware and software systems, and when there is a word input requirement, any device with a touchscreen may use the technical solutions provided in the embodiments of the present invention. For example, if the technical solutions of the present invention are implemented in an Android operating system, in an implementation solution, a TextView control may be extended in an input method, and a word tap selection event is added to the control. When a finger of a user slides content in the control, a color of a word that has been slid changes automatically, and the word that has been slid in the control is stored in the control. When the finger of the user leaves the control, input method software may obtain, by using an interface provided by the control, the word that was just selected by the user, and output, to a specified text input box, the word that is just now selected by the user.

In combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It should be noted that, same or corresponding technical features in the embodiments of the present invention may provide reference to each other.

Steps of methods or algorithms described in the embodiments disclosed in this specification may be implemented by hardware, a software module executed by a processor, or a combination thereof. The software module may reside in a random access memory (RAM), a memory, a read-only memory (ROM), an electrically programmable ROM, an electrically erasable programmable ROM, a register, a hard disk, a removable disk, a CD-ROM, or any other form of storage medium known in the art.

In the foregoing specific implementation manners, the objective, technical solutions, and benefits of the present invention are further described in detail. It should be understood that the foregoing descriptions are merely specific implementation manners of the present invention, but are not intended to limit the protection scope of the present invention, as defined by the appended claims.

## Claims

1. A text input method, wherein the method comprises:
a) acquiring (101) a text input instruction that is generated by performing a first operation by a user, and presenting an input text according to the text input instruction;
b) querying (102) a text prediction database according to the input text, to acquire a predicted text set corresponding to the input text, and presenting the predicted text set corresponding to the input text, wherein the predicted text set is a set of phrases or sentences;
c) acquiring (103) a predicted text selection instruction that is generated by performing a second operation by the user, and acquiring a predicted text in a subset of the predicted text set according to the predicted text selection instruction, wherein the predicted text is a field in the subset of the predicted text set; and
d) acquiring (104) a predicted text input instruction that is generated by performing a third operation by the user, and inputting the predicted text into a text input window according to the predicted text input instruction;
e) wherein the second operation in step c) is a slide gesture operation and the method further comprises:
el) determining, according to the predicted text selection instruction generated by the slide gesture operation, a sliding track corresponding to the slide gesture operation, wherein the sliding track is a track formed by action points of the slide gesture operation on an output device and is displayed next to the phrase or sentence; and
f) the acquiring a predicted text in a subset of the predicted text set according to the predicted text selection instruction comprises:
g) determining a text field in the subset of the predicted text set according to the sliding track,
h) when it is detected that the second operation is the slide gesture operation, displaying, at a preset position, a predicted text selected by the slide gesture operation, the present position indicating that the predicted text is in a pre-input state, where pre-input refers to that input content being in a temporary state, wherein a further processing operation needs to be performed on the input content in the temporary state to really input the text into the text input window or the pre-input text in the temporary state may be deleted by a simple operation; and
i) wherein each subset in the predicted text set is provided with a mark line; the second operation is a slide gesture operation performed on the mark line by the user; and
the acquiring a predicted text in a subset of the predicted text set according to the predicted text selection instruction comprises:
acquiring, according to a sliding track of the slide gesture operation on the mark line, a text field corresponding to a mark line that coincides with the sliding track.

2. The text input method according to claim 1, wherein after the acquiring the predicted text in the subset of the predicted text set according to the predicted text selection instruction, the method further comprises:
displaying the predicted text by means of highlight display or grayscale display, or by using a color differentiated from that of an unselected text.

3. The text input method according to any one of claims 1 to 2, wherein the acquiring a predicted text input instruction that is generated by performing a third operation by the user, and inputting the predicted text into a text input window according to the predicted text input instruction comprises:
acquiring a predicted text input instruction that is generated by tapping a preset button by the user, and inputting the predicted text into the text input window according to the predicted text input instruction.

4. The text input method according to claim 1, comprising:
acquiring (301) a position at which a cursor is located in a text input window; and
acquiring (302) a text input instruction that is generated by performing a fourth operation by a user, and inputting, according to the text input instruction, an already input text in the text input window into the position at which the cursor is located in the text input window.

5. The text input method according to claim 4, wherein the fourth operation is a slide gesture operation; the method further comprises: determining, according to the text input instruction generated by the slide gesture operation, a sliding track corresponding to the slide gesture operation, wherein the sliding track is a track formed by action points of the slide gesture operation on an output device; and
the inputting, according to the text input instruction, an already input text in the text input window into the position at which the cursor is located in the text input window comprises:
determining, according to the sliding track, the already input text in the text input window, and inputting the already input text into the position at which the cursor is located in the text input window.

6. The text input method according to claim 5, wherein all already input texts in the text input window are provided with a mark line; the fourth operation is a slide gesture operation performed on the mark line by the user; and
the inputting, according to the text input instruction, an already input text in the text input window into the position at which the cursor is located in the text input window comprises:
acquiring, according to a sliding track of the slide gesture operation on the mark line, an already input text corresponding to a mark line that coincides with the sliding track, and inputting the already input text into the position at which the cursor is located in the text input window.

7. A terminal, wherein the terminal comprises: an input device (601, 701), a processor (602, 702), a memory (603, 703), and a software module that is physically stored in the memory (603, 703), wherein the software module comprises instructions that is used to enable the processor (602, 702) to perform the following processes:
a) acquiring a text input instruction that is generated by performing a first operation by a user, and presenting an input text according to the text input instruction;
b) querying a text prediction database according to the input text, to acquire a predicted text set corresponding to the input text, and presenting the predicted text set corresponding to the input text, wherein the predicted text set is a set of phrases or sentences;
c) acquiring a predicted text selection instruction that is generated by performing a second operation by the user, and acquiring a predicted text in a subset of the predicted text set according to the predicted text selection instruction, wherein the predicted text is a field in the subset of the predicted text set; and
d) acquiring a predicted text input instruction that is generated by performing a third operation by the user, and inputting the predicted text into a text input window according to the predicted text input instruction,
f) wherein in step c) the second operation is a slide gesture operation;
the software module further comprises an instruction that is used to enable the processor (602, 702) to perform the following process: determining, according to the predicted text selection instruction generated by the slide gesture operation, a sliding track corresponding to the slide gesture operation, wherein the sliding track is a track formed by action points of the slide gesture operation on an output device and is displayed next to the phrase or sentence; and
g) an instruction that is used by the software module to enable the processor (602, 702) to perform the acquiring a predicted text in a subset of the predicted text set according to the predicted text selection instruction is:
determining a text field in the subset of the predicted text set according to the sliding track,
h) the software module further comprises an instruction that is used to enable the processor (602, 702) to perform the following process:
when it is detected that the second operation is the slide gesture operation, displaying, at a preset position, a predicted text selected by the slide gesture operation, the present position indicating that the predicted text is in a pre-input state, where pre-input refers to that input content being in a temporary state, wherein a further processing operation needs to be performed on the input content in the temporary state to really input the text into the text input window or the pre-input text in the temporary state may be deleted by a simple operation; and
i) wherein each subset in the predicted text set is provided with a mark line; the second operation is a slide gesture operation performed on the mark line by the user; and
an instruction that is used by the software module to enable the processor (602, 702) to perform the acquiring a predicted text in a subset of the predicted text set according to the predicted text selection instruction is:
acquiring, according to a sliding track of the slide gesture operation on the mark line, a text field corresponding to a mark line that coincides with the sliding track.

8. The terminal according to claim 7, wherein after the acquiring the predicted text in the subset of the predicted text set according to the predicted text selection instruction, the software module further comprises an instruction that is used to enable the processor (602, 702) to perform the following process:
displaying the predicted text by means of highlight display or grayscale display, or by using a color differentiated from that of an unselected text.

9. The terminal according to any one of claims 7 to 8, wherein an instruction that is used by the software module to enable the processor (602, 702) to perform the acquiring a predicted text input instruction that is generated by performing a third operation by the user, and inputting the predicted text into a text input window according to the predicted text input instruction is:
acquiring a predicted text input instruction that is generated by tapping a preset button by the user, and inputting the predicted text into the text input window according to the predicted text input instruction.

10. The terminal according to claim 7, wherein the software module comprises instructions that is used to enable the processor (602, 702) to perform the following processes:
acquiring a position at which a cursor is located in a text input window; and
acquiring a text input instruction that is generated by performing a fourth operation by a user, and inputting, according to the text input instruction, an already input text in the text input window into the position at which the cursor is located in the text input window.

11. The terminal according to claim 10, wherein the fourth operation is a slide gesture operation; the software module further comprises an instruction that is used to enable the processor (602, 702) to perform the following process: determining, according to the text input instruction generated by the slide gesture operation, a sliding track corresponding to the slide gesture operation, wherein the sliding track is a track formed by action points of the slide gesture operation on an output device; and
an instruction that is used by the software module to enable the processor (602, 702) to perform the inputting, according to the text input instruction, an already input text in the text input window into the position at which the cursor is located in the text input window is:
determining, according to the sliding track, the already input text in the text input window, and inputting the already input text into the position at which the cursor is located in the text input window.

12. The terminal according to claim 11, wherein all already input texts in the text input window are provided with a mark line; the fourth operation is a slide gesture operation performed on the mark line by the user; and
an instruction that is used by the software module to enable the processor (602, 702) to perform the inputting, according to the text input instruction, an already input text in the text input window into the position at which the cursor is located in the text input window is:
acquiring, according to a sliding track of the slide gesture operation on the mark line, an already input text corresponding to a mark line that coincides with the sliding track, and inputting the already input text into the position at which the cursor is located in the text input window.

## Patentansprüche

1. Texteingabeverfahren, wobei das Verfahren umfasst:
a) Erhalten (101) einer Texteingabeanweisung, die durch Durchführen einer ersten Operation durch einen Benutzer erzeugt wird, und Darstellen eines eingegebenen Textes gemäß der Texteingabeanweisung;
b) Abfragen (102) einer Textvorhersagedatenbank gemäß dem eingegebenen Text, um eine vorhergesagte Texteinheit entsprechend dem eingegebenen Text zu erhalten, und Darstellen der vorhergesagten Texteinheit entsprechend dem eingegebenen Text, wobei die vorhergesagte Texteinheit eine Einheit von Satzteilen und Sätzen ist;
c) Erhalten (103) einer Auswahlanweisung für vorhergesagten Text, die durch Durchführen einer zweiten Operation durch den Benutzer erzeugt wird, und Erhalten eines vorhergesagten Textes in einer Untereinheit der vorhergesagten Texteinheit gemäß der Auswahlanweisung für vorhergesagten Text, wobei der vorhergesagte Text ein Bereich in der Untereinheit der vorhergesagten Texteinheit ist; und
d) Erhalten (104) einer Eingabeanweisung für vorhergesagten Text, die durch Durchführen einer dritten Operation durch den Benutzer erzeugt wird, und Eingeben des vorhergesagten Textes in ein Texteingabefenster gemäß der Eingabeanweisung für vorhergesagten Text;
e) wobei die zweite Operation in Schritt c) eine Wischgestenoperation ist und das Verfahren ferner umfasst:
el) Bestimmen, gemäß der durch die Wischgestenoperation erzeugten Auswahlanweisung für vorhergesagten Text, einer Wischspur entsprechend der Wischgestenoperation, wobei die Wischspur eine Spur ist, die durch Aktionspunkte der Wischgestenoperation an einer Ausgabevorrichtung gebildet ist und neben dem Satzteil oder Satz angezeigt wird; und
f) wobei das Erhalten eines vorhergesagten Textes in einer Untereinheit der vorhergesagten Texteinheit gemäß der Auswahlanweisung für vorhergesagten Text umfasst:
g) Bestimmen eines Textbereichs in der Untereinheit der vorhergesagten Texteinheit gemäß der Wischspur,
h) wenn erkannt wird, dass die zweite Operation die Wischgestenoperation ist, Anzeigen, an einer voreingestellten Position, eines durch die Wischgestenoperation ausgewählten vorhergesagten Textes, wobei die aktuelle Position anzeigt, dass sich der vorhergesagte Text in einem Zustand vor Eingabe befindet, wobei vor Eingabe bedeutet, dass sich der eingegebene Inhalt in einem vorläufigen Zustand befindet, wobei eine weitere Verarbeitungsoperation an dem eingegebenen Inhalt in dem vorläufigen Zustand durchgeführt werden muss, um den Text tatsächlich in das Texteingabefenster einzugeben, oder der Text vor Eingabe in dem vorläufigen Zustand durch eine einfache Operation gelöscht werden kann; und
i) wobei jede Untereinheit in der vorhergesagten Texteinheit mit einer Markierungslinie versehen ist; wobei die zweite Operation eine Wischgestenoperation ist, die an der Markierungslinie durch den Benutzer durchgeführt wird; und
wobei das Erhalten eines vorhergesagten Textes in einer Untereinheit der vorhergesagten Texteinheit gemäß der Auswahlanweisung für vorhergesagten Text umfasst:
Erhalten, gemäß einer Wischspur der Wischgestenoperation an der Markierungslinie, eines Textbereichs entsprechend einer Markierungslinie, die sich mit der Wischspur deckt.

2. Texteingabeverfahren nach Anspruch 1, wobei nach dem Erhalten des vorhergesagten Textes in der Untereinheit der vorhergesagten Texteinheit gemäß der Auswahlanweisung für vorhergesagten Text, das Verfahren ferner umfasst:
Anzeigen des vorhergesagten Textes mittels einer Markierungsanzeige oder Graustufenanzeige, oder durch Verwenden einer Farbe, die sich von der eines nicht ausgewählten Textes unterscheidet.

3. Texteingabeverfahren nach einem der Ansprüche 1 bis 2, wobei das Erhalten einer Eingabeanweisung für vorhergesagten Text, die durch Durchführen einer dritten Operation durch den Benutzer erzeugt wird, und das Eingeben des vorhergesagten Textes in ein Texteingabefenster gemäß der Eingabeanweisung für vorhergesagten Text umfassen:
Erhalten einer Eingabeanweisung für vorhergesagten Text, die durch Tippen auf eine voreingestellte Schaltfläche durch den Benutzer erzeugt wird, und Eingeben des vorhergesagten Textes in das Texteingabefenster gemäß der Eingabeanweisung für vorhergesagten Text.

4. Texteingabeverfahren nach Anspruch 1, umfassend:
Erhalten (301) einer Position, an der sich ein Positionsanzeiger in einem Texteingabefenster befindet; und
Erhalten (302) einer Texteingabeanweisung, die durch Durchführen einer vierten Operation durch einen Benutzer erzeugt wird, und Eingeben, gemäß der Texteingabeanweisung, eines bereits eingegebenen Textes in das Texteingabefenster in der Position, an der sich der Positionsanzeiger in dem Texteingabefenster befindet.

5. Texteingabeverfahren nach Anspruch 4, wobei die vierte Operation eine Wischgestenoperation ist; wobei das Verfahren ferner umfasst: Bestimmen, gemäß der durch die Wischgestenoperation erzeugten Texteingabeanweisung, einer Wischspur entsprechend der Wischgestenoperation, wobei die Wischspur eine Spur ist, die durch Aktionspunkte der Wischgestenoperation an einer Ausgabevorrichtung gebildet ist; und wobei das Eingeben, gemäß der Texteingabeanweisung, eines bereits eingegebenen Textes in das Texteingabefenster in der Position, an der sich der Positionsanzeiger in dem Texteingabefenster befindet, umfasst:
Bestimmen, gemäß der Wischspur, des bereits eingegebenen Textes in dem Texteingabefenster, und Eingeben des bereits eingegebenen Textes in der Position, an der sich der Positionsanzeiger in dem Texteingabefenster befindet.

6. Texteingabeverfahren nach Anspruch 5, wobei alle bereits eingegebenen Texte in dem Texteingabefenster mit einer Markierungslinie versehen sind; die vierte Operation eine Wischgestenoperation ist, die an der Markierungslinie durch den Benutzer durchgeführt wird; und
das Eingeben, gemäß der Texteingabeanweisung, eines bereits eingegebenen Textes in das Texteingabefenster in der Position, an der sich der Positionsanzeiger in dem Texteingabefenster befindet, umfasst:
Erhalten, gemäß einer Wischspur der Wischgestenoperation an der Markierungslinie, eines bereits eingegebenen Textes entsprechend einer Markierungslinie, die sich mit der Wischspur deckt, und Eingeben des bereits eingegebenen Textes in der Position, an der sich der Positionsanzeiger in dem Texteingabefenster befindet.

7. Endgerät, wobei das Endgerät umfasst: eine Eingabevorrichtung (601, 701), einen Prozessor (602, 702), einen Speicher (603, 703) und ein Softwaremodul, das physisch in dem Speicher (603, 703) gespeichert ist, wobei das Softwaremodul Anweisungen umfasst, die verwendet werden, um dem Prozessor (602, 702) zu ermöglichen, die folgenden Prozesse durchzuführen:
a) Erhalten eines einer Texteingabeanweisung, die durch Durchführen einer ersten Operation durch einen Benutzer erzeugt wird, und Darstellen eines eingegebenen Textes gemäß der Texteingabeanweisung;
b) Abfragen einer Textvorhersagedatenbank gemäß dem eingegebenen Text, um eine vorhergesagte Texteinheit entsprechend dem eingegebenen Text zu erhalten, und Darstellen der vorhergesagten Texteinheit entsprechend dem eingegebenen Text, wobei die vorhergesagte Texteinheit eine Einheit von Satzteilen und Sätzen ist;
c) Erhalten einer Auswahlanweisung für vorhergesagten Text, die durch Durchführen einer zweiten Operation durch den Benutzer erzeugt wird, und Erhalten eines vorhergesagten Textes in einer Untereinheit der vorhergesagten Texteinheit gemäß der Auswahlanweisung für vorhergesagten Text, wobei der vorhergesagte Text ein Bereich in der Untereinheit der vorhergesagten Texteinheit ist; und
d) Erhalten einer Eingabeanweisung für vorhergesagten Text, die durch Durchführen einer dritten Operation durch den Benutzer erzeugt wird, und Eingeben des vorhergesagten Textes in ein Texteingabefenster gemäß der Eingabeanweisung für vorhergesagten Text,
f) wobei in Schritt c) die zweite Operation eine Wischgestenoperation ist;
wobei das Softwaremodul ferner eine Anweisung umfasst, die verwendet wird, um dem Prozessor (602, 702) zu ermöglichen, den folgenden Prozess durchzuführen: Bestimmen, gemäß der durch die Wischgestenoperation erzeugten Auswahlanweisung für vorhergesagten Text, einer Wischspur entsprechend der Wischgestenoperation, wobei die Wischspur eine Spur ist, die durch Aktionspunkte der Wischgestenoperation an einer Ausgabevorrichtung gebildet ist und neben dem Satzteil oder Satz angezeigt wird; und
g) eine Anweisung, die durch das Softwaremodul verwendet wird, um dem Prozessor (602, 702) zu ermöglichen, das Erhalten eines vorhergesagten Textes in einer Untereinheit der vorhergesagten Texteinheit gemäß der Auswahlanweisung für vorhergesagten Text durchzuführen, ist:
Bestimmen eines Textbereichs in der Untereinheit der vorhergesagten Texteinheit gemäß der Wischspur,
h) wobei das Softwaremodul ferner eine Anweisung umfasst, die verwendet wird, um dem Prozessor (602, 702) zu ermöglichen, den folgenden Prozess durchzuführen:
wenn erkannt wird, dass die zweite Operation die Wischgestenoperation ist, Anzeigen, an einer voreingestellten Position, eines durch die Wischgestenoperation ausgewählten vorhergesagten Textes, wobei die aktuelle Position anzeigt, dass sich der vorhergesagte Text in einem Zustand vor Eingabe befindet, wobei vor Eingabe bedeutet, dass sich der eingegebene Inhalt in einem vorläufigen Zustand befindet, wobei eine weitere Verarbeitungsoperation an dem eingegebenen Inhalt in dem vorläufigen Zustand durchgeführt werden muss, um den Text tatsächlich in das Texteingabefenster einzugeben, oder der Text vor Eingabe in dem vorläufigen Zustand durch eine einfache Operation gelöscht werden kann; und
i) wobei jede Untereinheit in der vorhergesagten Texteinheit mit einer Markierungslinie versehen ist; wobei die zweite Operation eine Wischgestenoperation ist, die an der Markierungslinie durch den Benutzer durchgeführt wird; und
wobei eine Anweisung, die durch das Softwaremodul verwendet wird, um dem Prozessor (602, 702) zu ermöglichen, das Erhalten eines vorhergesagten Textes in einer Untereinheit der vorhergesagten Texteinheit gemäß der Auswahlanweisung für vorhergesagten Text durchzuführen, ist:
Erhalten, gemäß einer Wischspur der Wischgestenoperation an der Markierungslinie, eines Textbereichs entsprechend einer Markierungslinie, die sich mit der Wischspur deckt.

8. Endgerät nach Anspruch 7, wobei nach dem Erhalten des vorhergesagten Textes in der Untereinheit der vorhergesagten Texteinheit gemäß der Auswahlanweisung für vorhergesagten Text, das Softwaremodul ferner eine Anweisung umfasst, die verwendet wird, um dem Prozessor (602, 702) zu ermöglichen, den folgenden Prozess durchzuführen:
Anzeigen des vorhergesagten Textes mittels einer Markierungsanzeige oder Graustufenanzeige, oder durch Verwenden einer Farbe, die sich von der eines nicht ausgewählten Textes unterscheidet.

9. Endgerät nach einem der Ansprüche 7 bis 8, wobei eine Anweisung, die durch das Softwaremodul verwendet wird, um dem Prozessor (602, 702) zu ermöglichen, das Erhalten einer Eingabeanweisung für vorhergesagten Text, die durch Durchführen einer dritten Operation durch den Benutzer erzeugt wird, und das Eingeben des vorhergesagten Textes in ein Texteingabefenster gemäß der Eingabeanweisung für vorhergesagten Text durchzuführen, ist:
Erhalten einer Eingabeanweisung für vorhergesagten Text, die durch Tippen auf eine voreingestellte Schaltfläche durch den Benutzer erzeugt wird, und Eingeben des vorhergesagten Textes in das Texteingabefenster gemäß der Eingabeanweisung für vorhergesagten Text.

10. Endgerät nach Anspruch 7, wobei das Softwaremodul Anweisungen umfasst, die verwendet werden, um dem Prozessor (602, 702) zu ermöglichen, die folgenden Prozesse durchzuführen:
Erhalten einer Position, an der sich ein Positionsanzeiger in einem Texteingabefenster befindet; und
Erhalten einer Texteingabeanweisung, die durch Durchführen einer vierten Operation durch einen Benutzer erzeugt wird, und Eingeben, gemäß der Texteingabeanweisung, eines bereits eingegebenen Textes in das Texteingabefenster in der Position, an der sich der Positionsanzeiger in dem Texteingabefenster befindet.

11. Endgerät nach Anspruch 10, wobei die vierte Operation eine Wischgestenoperation ist;
wobei das Softwaremodul ferner eine Anweisung umfasst, die verwendet wird, um dem Prozessor (602, 702) zu ermöglichen, den folgenden Prozess durchzuführen: Bestimmen, gemäß der durch die Wischgestenoperation erzeugten Texteingabeanweisung, einer Wischspur entsprechend der Wischgestenoperation, wobei die Wischspur eine Spur ist, die durch Aktionspunkte der Wischgestenoperation an einer Ausgabevorrichtung gebildet ist; und
wobei eine Anweisung, die durch das Softwaremodul verwendet wird, um dem Prozessor (602, 702) zu ermöglichen, das Eingeben, gemäß der Texteingabeanweisung, eines bereits eingegebenen Textes in das Texteingabefenster in der Position, an der sich der Positionsanzeiger in dem Texteingabefenster befindet, durchzuführen, ist:
Bestimmen, gemäß der Wischspur, des bereits eingegebenen Textes in dem Texteingabefenster, und Eingeben des bereits eingegebenen Textes in der Position, an der sich der Positionsanzeiger in dem Texteingabefenster befindet.

12. Endgerät nach Anspruch 11, wobei alle bereits eingegebenen Texte in dem Texteingabefenster mit einer Markierungslinie versehen sind; die vierte Operation eine Wischgestenoperation ist, die an der Markierungslinie durch den Benutzer durchgeführt wird; und
wobei eine Anweisung, die durch das Softwaremodul verwendet wird, um dem Prozessor (602, 702) zu ermöglichen, das Eingeben, gemäß der Texteingabeanweisung, eines bereits eingegebenen Textes in das Texteingabefenster in der Position, an der sich der Positionsanzeiger in dem Texteingabefenster befindet, durchzuführen, ist:
Erhalten, gemäß einer Wischspur der Wischgestenoperation an der Markierungslinie, eines bereits eingegebenen Textes entsprechend einer Markierungslinie, die sich mit der Wischspur deckt, und Eingeben des bereits eingegebenen Textes in der Position, an der sich der Positionsanzeiger in dem Texteingabefenster befindet.

## Revendications

1. Procédé d'entrée de texte, dans lequel le procédé comprend :
a) l'acquisition (101) d'une instruction d'entrée de texte qui est générée en exécutant une première opération par un utilisateur, et la présentation d'un texte entré en fonction de l'instruction d'entrée de texte ;
b) la requête (102) à une base de données de prédiction de texte en fonction du texte entré, en vue d'acquérir un ensemble de texte prédit correspondant au texte entré, et la présentation de l'ensemble de texte prédit correspondant au texte entré, l'ensemble de texte prédit étant un ensemble d'expressions ou de phrases ;
c) l'acquisition (103) d'une instruction de sélection de texte prédit qui est générée en exécutant une deuxième opération par l'utilisateur, et l'acquisition d'un texte prédit dans un sous-ensemble de l'ensemble de texte prédit en fonction de l'instruction de sélection de texte prédit, le texte prédit étant un champ dans le sous-ensemble de l'ensemble de texte prédit ; et
d) l'acquisition (104) d'une instruction d'entrée de texte prédit qui est générée en exécutant une troisième opération par l'utilisateur, et l'entrée du texte prédit dans une fenêtre d'entrée de texte en fonction de l'instruction d'entrée de texte prédit ;
e) dans lequel la deuxième opération dans l'étape c) est une opération de geste de glissement et le procédé comprend en outre :
el) la détermination, en fonction de l'instruction de sélection de texte prédit générée par l'opération de geste de glissement, d'un suivi de glissement correspondant à l'opération de geste de glissement, le suivi de glissement étant un suivi formé par des points d'action de l'opération de geste de glissement sur un dispositif de sortie et est affiché près de l'expression ou de la phrase ; et
f) l'acquisition d'un texte prédit dans un sous-ensemble de l'ensemble de texte prédit en fonction de l'instruction de sélection de texte prédit comprend :
g) la détermination d'un champ de texte dans le sous-ensemble de l'ensemble de texte prédit en fonction du suivi de glissement,
h) lorsqu'on détecte que la deuxième opération est l'opération de geste de glissement, l'affichage, au niveau d'une position prédéfinie, d'un texte prédit sélectionné par l'opération de geste de glissement, la présente position indiquant que le texte prédit se trouve dans un état de pré-entrée, où la pré-entrée fait référence au fait que ce contenu d'entrée se trouve dans un état temporaire, une opération de traitement supplémentaire devant être exécutée sur le contenu d'entrée dans l'état temporaire pour vraiment entrer le texte dans la fenêtre d'entrée de texte ou le texte de pré-entrée dans l'état temporaire pouvant être effacé par une simple opération ; et
i) dans lequel chaque sous-ensemble dans l'ensemble de texte prédit est pourvu d'une ligne de marquage ; la deuxième opération est une opération de geste de glissement exécutée sur la ligne de marquage par l'utilisateur ; et
l'acquisition d'un texte prédit dans un sous-ensemble de l'ensemble de texte prédit en fonction de l'instruction de sélection de texte prédit comprend :
l'acquisition, en fonction d'un suivi de glissement de l'opération de geste de glissement sur la ligne de marquage, d'un champ de texte correspondant à une ligne de marquage qui coïncide avec le suivi de glissement.

2. Procédé d'entrée de texte selon la revendication 1, dans lequel après l'acquisition du texte prédit dans le sous-ensemble de l'ensemble de texte prédit en fonction de l'instruction de sélection de texte prédit, le procédé comprend en outre :
l'affichage du texte prédit grâce à un affichage en surbrillance ou un affichage en niveau de gris, ou en utilisant une couleur différenciée de celle d'un texte non sélectionné.

3. Procédé d'entrée de texte selon l'une quelconque des revendications 1 à 2, dans lequel l'acquisition d'une instruction d'entrée de texte prédit qui est générée en exécutant une troisième opération par l'utilisateur, et l'entrée du texte prédit dans une fenêtre d'entrée de texte en fonction de l'instruction d'entrée de texte prédit comprennent :
l'acquisition d'une instruction d'entrée de texte prédit qui est générée en cliquant sur un bouton prédéfini par l'utilisateur, et l'entrée du texte prédit dans la fenêtre d'entrée de texte en fonction de l'instruction d'entrée de texte prédit.

4. Procédé d'entrée de texte selon la revendication 1, comprenant :
l'acquisition (301) d'une position à laquelle un curseur est situé dans une fenêtre d'entrée de texte ; et
l'acquisition (302) d'une instruction d'entrée de texte qui est générée en exécutant une quatrième opération par un utilisateur, et l'entrée, en fonction de l'instruction d'entrée de texte, d'un texte déjà entré dans la fenêtre d'entrée de texte dans la position à laquelle le curseur est situé dans la fenêtre d'entrée de texte.

5. Procédé d'entrée de texte selon la revendication 4, dans lequel la quatrième opération est une opération de geste de glissement ; le procédé comprend en outre : la détermination, en fonction de l'instruction d'entrée de texte générée par l'opération de geste de glissement, d'un suivi de glissement correspondant à une opération de geste de glissement, le suivi de glissement étant un suivi formé par des points d'action de l'opération de geste de glissement sur un dispositif de sortie ; et
l'entrée, en fonction de l'instruction d'entrée de texte, d'un texte déjà entré dans la fenêtre d'entrée de texte dans la position à laquelle le curseur est situé dans la fenêtre d'entrée de texte comprend :
la détermination, en fonction du suivi de glissement, du texte déjà entré dans la fenêtre d'entrée de texte, et l'entrée du texte déjà entré dans la position à laquelle le curseur est situé dans la fenêtre d'entrée de texte.

6. Procédé d'entrée de texte selon la revendication 5, dans lequel tous les textes déjà entrés dans la fenêtre d'entrée de texte sont pourvus d'une ligne de marquage ; la quatrième opération est une opération de geste de glissement exécutée sur la ligne de marquage par l'utilisateur ; et
l'entrée, en fonction de l'instruction d'entrée de texte, d'un texte déjà entré dans la fenêtre d'entrée de texte dans la position à laquelle le curseur est situé dans la fenêtre d'entrée de texte comprend :
l'acquisition, en fonction d'un suivi de glissement de l'opération de geste de glissement sur la ligne de marquage, d'un texte déjà entré correspondant à une ligne de marquage qui coïncide avec le suivi de glissement, et l'entrée du texte déjà entré dans la position à laquelle le curseur est situé dans la fenêtre d'entrée de texte.

7. Terminal, dans lequel le terminal comprend : un dispositif d'entrée (601, 701), un processeur (602, 702), une mémoire (603, 703), et un module de logiciel qui est stocké physiquement dans la mémoire (603, 703), le module de logiciel comprenant des instructions qui sont utilisées pour permettre au processeur (602, 702) d'exécuter les processus suivants :
a) l'acquisition d'une instruction d'entrée de texte qui est générée en exécutant une première opération par un utilisateur, et présentant un texte entré en fonction de l'instruction d'entrée de texte ;
b) la requête à une base de données de prédiction de texte en fonction du texte entré, en vue d'acquérir un ensemble de texte prédit correspondant au texte entré, et la présentation de l'ensemble de texte prédit correspondant au texte entré, l'ensemble de texte prédit étant un ensemble d'expressions ou de phrases ;
c) l'acquisition d'une instruction de sélection de texte prédit qui est générée en exécutant une deuxième opération par l'utilisateur, et l'acquisition d'un texte prédit dans un sous-ensemble de l'ensemble de texte prédit en fonction de l'instruction de sélection de texte prédit, le texte prédit étant un champ dans le sous-ensemble de l'ensemble de texte prédit ; et
d) l'acquisition d'une instruction d'entrée de texte prédit qui est générée en exécutant une troisième opération par l'utilisateur, et l'entrée du texte prédit dans une fenêtre d'entrée de texte en fonction de l'instruction d'entrée de texte prédit ;
f) dans lequel dans l'étape c) la deuxième opération est une opération de geste de glissement ;
le module de logiciel comprend en outre une instruction qui est utilisée pour permettre au processeur (602, 702) d'exécuter le processus suivant : la détermination, en fonction de l'instruction de sélection de texte prédit générée par l'opération de geste de glissement, d'un suivi de glissement correspondant à l'opération de geste de glissement, le suivi de glissement étant un suivi formé par des points d'action de l'opération de geste de glissement sur un dispositif de sortie et étant affiché près de l'expression ou de la phrase ; et
g) une instruction qui est utilisée par le module de logiciel pour permettre au processeur (602, 702) d'exécuter l'acquisition d'un texte prédit dans un sous-ensemble de l'ensemble de texte prédit en fonction de l'instruction de sélection de texte prédit est :
la détermination d'un champ de texte dans le sous-ensemble de l'ensemble de texte prédit en fonction du suivi de glissement,
h) le module de logiciel comprend en outre une instruction qui est utilisée pour permettre au processeur (602, 702) d'exécuter le processus suivant :
lorsqu'on détecte que la deuxième opération est l'opération de geste de glissement, l'affichage, au niveau d'une position prédéfinie, d'un texte prédit sélectionné par l'opération de geste de glissement, la présente position indiquant que le texte prédit se trouve dans un état de pré-entrée, où la pré-entrée fait référence au fait que ce contenu d'entrée se trouve dans un état temporaire, une opération de traitement supplémentaire devant être exécutée sur le contenu d'entrée dans l'état temporaire pour vraiment entrer le texte dans la fenêtre d'entrée de texte ou le texte de pré-entrée dans l'état temporaire pouvant être effacé par une simple opération ; et
i) dans lequel chaque sous-ensemble dans l'ensemble de texte prédit est pourvu d'une ligne de marquage ; la deuxième opération est une opération de geste de glissement exécutée sur la ligne de marquage par l'utilisateur ; et
une instruction qui est utilisée par le module de logiciel pour permettre au processeur (602, 702) d'exécuter l'acquisition d'un texte prédit dans un sous-ensemble de l'ensemble de texte prédit en fonction de l'instruction de sélection de texte prédit est :
l'acquisition, en fonction d'un suivi de glissement de l'opération de geste de glissement sur la ligne de marquage, d'un champ de texte correspondant à une ligne de marquage qui coïncide avec le suivi de glissement.

8. Terminal selon la revendication 7, dans lequel après l'acquisition du texte prédit dans le sous-ensemble de l'ensemble de texte prédit en fonction de l'instruction de sélection de texte prédit, le module de logiciel comprend en outre une instruction qui est utilisée pour permettre au processeur (602, 702) d'exécuter le processus suivant :
l'affichage du texte prédit grâce à un affichage en surbrillance ou un affichage en niveau de gris, ou en utilisant une couleur différenciée de celle d'un texte non sélectionné.

9. Terminal selon l'une quelconque des revendications 7 à 8, dans lequel une instruction qui est utilisée par le module de logiciel pour permettre au processeur (602, 702) d'exécuter l'acquisition d'une instruction d'entrée de texte prédit qui est générée en exécutant une troisième opération par l'utilisateur, et l'entrée du texte prédit dans une fenêtre d'entrée de texte en fonction de l'instruction d'entrée de texte prédit est :
l'acquisition d'une instruction d'entrée de texte prédit qui est générée en cliquant sur un bouton prédéfini par l'utilisateur, et l'entrée du texte prédit dans la fenêtre d'entrée de texte en fonction de l'instruction d'entrée de texte prédit.

10. Terminal selon la revendication 7, dans lequel le module de logiciel comprend des instructions qui sont utilisées pour permettre au processeur (602, 702) d'exécuter les processus suivants :
l'acquisition d'une position à laquelle un curseur est situé dans une fenêtre d'entrée de texte ; et
l'acquisition d'une instruction d'entrée de texte qui est générée en exécutant une quatrième opération par un utilisateur, et l'entrée, en fonction de l'instruction d'entrée de texte, d'un texte déjà entré dans la fenêtre d'entrée de texte dans la position à laquelle le curseur est situé dans la fenêtre d'entrée de texte.

11. Terminal selon la revendication 10, dans lequel la quatrième opération est une opération de geste de glissement ; le module de logiciel comprend en outre une instruction qui est utilisée pour permettre au processeur (602, 702) d'exécuter le processus suivant : la détermination, en fonction de l'instruction d'entrée de texte générée par l'opération de geste de glissement, d'un suivi de glissement correspondant à une opération de geste de glissement, le suivi de glissement étant un suivi formé par des points d'action de l'opération de geste de glissement sur un dispositif de sortie ; et
une instruction qui est utilisée par le module de logiciel pour permettre au processeur (602, 702) d'exécuter l'entrée, en fonction de l'instruction d'entrée de texte, d'un texte déjà entré dans la fenêtre d'entrée de texte dans la position à laquelle le curseur est situé dans la fenêtre d'entrée de texte est :
la détermination, en fonction du suivi de glissement, du texte déjà entré dans la fenêtre d'entrée de texte, et l'entrée du texte déjà entré dans la position à laquelle le curseur est situé dans la fenêtre d'entrée de texte.

12. Terminal selon la revendication 11, dans lequel tous les textes déjà entrés dans la fenêtre d'entrée de texte sont pourvus d'une ligne de marquage ; la quatrième opération est une opération de geste de glissement exécutée sur la ligne de marquage par l'utilisateur ; et une instruction qui est utilisée par le module de logiciel pour permettre au processeur (602, 702) d'exécuter l'entrée, en fonction de l'instruction d'entrée de texte, d'un texte déjà entré dans la fenêtre d'entrée de texte dans la position à laquelle le curseur est situé dans la fenêtre d'entrée de texte est :
l'acquisition, en fonction d'un suivi de glissement de l'opération de geste de glissement sur la ligne de marquage, d'un texte déjà entré correspondant à la ligne de marquage qui coïncide avec le suivi de glissement, et l'entrée du texte déjà entré dans la position à laquelle le curseur est situé dans la fenêtre d'entrée de texte.
